# EUROPEAN PATENT APPLICATION

(11) **EP 1 688 641 A2**
(43) Date of publication of application: **09.08.2006**
(21) Application number: 06100977.5
(22) Date of filing: 27.01.2006
(51) Int. Cl.: F16G 5/20, B29D 29/10

(54) **Non-extendible element, apparatus and method to produce it**

(30) Priority: 31.01.2005 IT UD20050009
(71) Applicant: ELATECH SRL, I-24012 Brembilla BG (IT)
(72) Inventor: Scaglia, Riccardo, 20123 Milano (IT)
(74) Representative: Petraz, Gilberto Luigi

(57) **Abstract**

Non-extendible element (10) comprising a base body made of elastomeric material internally reinforced with non-extendible wires (11) lying on a longitudinal plane (L) and interposed between an inner part (10a) and an outer part (10b). The inner part (10a) is provided with longitudinal hollows (12) and grooves (13) disposed transversely to the longitudinal hollows (12), which grooves have a depth that is deeper than or equal to the depth (A) of the longitudinal hollows (12) and that is equal to the thickness (S) of the inner part (10a).

## Description

### FIELD OF THE INVENTION

The present invention concerns a non-extendible, or substantially non-extendible element, such as a belt, a strip, a cable or suchlike, and also the apparatus and method to produce them.

The non-extendible element in particular is made of elastomeric material reinforced with a plurality of non-extendible wires made of metal, or fiber glass, carbon fiber or other synthetic fibers, by means of a single step of continuous extrusion which provides to use a rotary drum mold.

### BACKGROUND OF THE INVENTION

A transmission element is known, which comprises a base body made of elastomeric material internally reinforced with a plurality of reinforcement wires, of the non-extendible type, which are completely drowned in the material between an inner part of the element, subject to compression and able to contact the mechanical movement members, and an outer part of the element, subject to tensioning.

The inner part is provided with a plurality of V-shaped longitudinal hollows or notches, of a size compatible with that of said mechanical movement members. Normally the depth of the hollows is equal to about half the thickness of the inner part of the element.

In order to produce this known element, in which the elastomeric material completely covers the reinforcement wires with no break in continuity, two molding stations are normally used, each having a respective extruder, in order to deposit the elastomeric material in fluid form, and a rotary drum mold.

The first molding station allows to associate, by means of extrusion, the reinforcement wires to a first elastomeric part of the element. During this operation the reinforcement wires are held in contact with the cylindrical surface of the drum.

The second molding station is disposed downstream of the first and allows to complete the remaining elastomeric part of the element, assembling it hot with the first part, so as to totally drown the reinforcement wires.

One disadvantage of the state of the art is that the element is made by means of two distinct operations, made with two distinct molding stations.

Another disadvantage of the state of the art is that the element is made in two parts, and it is consequently necessary to guarantee adequate adhesion between the two parts in the second molding station.

One purpose of the present invention is to achieve an element, of the substantially non-extendible type, made of elastomeric material reinforced with a plurality of non-extendible wires, which is more flexible and silent than known elements.

Another purpose of the present invention is to achieve, simply and economically, an element of the substantially non-extendible type made of elastomeric material, reinforced with a plurality of non-extendible wires, possibly in a single operation, that is, without having recourse to the double molding station.

The Applicant has devised, tested and embodied the present invention to overcome the shortcomings of the state of the art, to achieve these and other purposes and also to obtain the advantages indicated hereafter.

### SUMMARY OF THE INVENTION

The present invention is set forth and characterized in the main claims, while the dependent claims describe other characteristics of the invention or variants to the main inventive idea.

In accordance with the above purposes, a non-extendible element according to the present invention is for example a belt, a strip, a cable or suchlike, and comprises a base body made of elastomeric material internally reinforced with a plurality of wires of a substantially non-extendible material, such as for example metal or fiber glass, carbon fiber or other synthetic fiber like Kevlar® , Mylax® or other.

The plurality of wires lie on a longitudinal plane and are interposed between an outer part and an inner part. The latter is provided with a plurality of longitudinal hollows and a plurality of grooves disposed transversely to the hollows.

According to a characteristic of the present invention, the depth of the grooves is greater than or equal to that of the hollows and is substantially equal to the thickness of the inner part, so that the grooves arrive as far as the reinforcement wires.

Thanks to the relatively great depth of the grooves, the non-extendible element according to the present invention is more flexible and more silent than known elements.

According to another characteristic of the present invention, each groove has a substantially rectilinear longitudinal development and defines an angle "α" comprised between about 45° and about 90° with respect to the longitudinal axis of the element.

The grooves have a width which varies from about 0.5 to 2 millimeters.

In order to produce the element, an apparatus is used which comprises a rotary drum and an endless belt that cooperates with a cylindrical or lateral surface of the drum, to define a molding cavity, inside which by means of extrusion means comprising one or more extruders, elastomeric material in fluid form is able to be deposited.

According to a characteristic of the present invention, the rotary drum comprises a plurality of spacer means disposed transversely on the cylindrical surface and protruding towards the outside with respect to the latter. The function of the spacer means is to maintain the plurality of wires distanced from the cylindrical surface, that is, at a determinate distance therefrom.

In order to produce the element a method according to the present invention is used which provides that, while the wires are inserted into the molding cavity, the elastomeric material in fluid form is deposited inside said cavity so that it drowns the wires, at the same time creating both the outer part and also the inner part of the element.

In this way, the apparatus and the method according to the present invention allow to produce a non-extendible element obtained advantageously in a single operation effected with a single molding station.

According to the invention, the spacer means comprise blades, made for example of metal, or other material having similar mechanical characteristics.

The blades are preferably rectilinear, but advantageously can also be arched or curved.

The blades are disposed in corresponding seatings or slits, made in the cylindrical surface, for example by milling.

If the blades are rectilinear, the longitudinal axis of each seating defines a determinate angle "α" comprised between 0° and about 45° with respect to the axis of rotation of the rotary drum.

Moreover, each blade is shaped so as to comprise two steps made at the ends of its upper edge.

At the two ends of the cylindrical surface of the rotary drum two annular flanges are disposed, each of which comprises a respective annular edge facing towards the cylindrical surface of the rotary drum and cooperating with the steps of the blades in order to maintain the blades inside their seatings.

The function of each flange is also to define a supporting surface for said endless belt.

According to another characteristic of the invention, the blades are distanced from each other at regular intervals with a pitch "P" calculated as a function of the radius of the rotary drum and the distance "S" of the blades from the cylindrical surface of the drum.

This is to guarantee that the non-extendible wires, which between two adjacent blades tend to assume a linear form, are in any case distanced, at least by a determinate value, from the cylindrical surface which is curved so as to reduce the polygonal effect.

According to another characteristic of the invention, the distance "C" between the upper edge of the blades and the inner surface of the endless belt, facing towards the cylindrical surface, is correlated to the diameter of the wires and to the thickness of the element, outside the wires.

### BRIEF DESCRIPTION OF THE DRAWINGS

These and other characteristics of the present invention will become apparent from the following description of a preferential form of embodiment, given as a non-restrictive example with reference to the attached drawings wherein:
- - fig. 1: is a cross section of a non-extendible element according to the present invention;
- - fig. 2: is a section from II to II of fig. 1;
- - fig. 3: is a plane view of an apparatus according to the present invention to produce a non-extendible element;
- - fig. 4: is a partly sectioned detail of the apparatus in fig. 3;
- - fig. 5: is a lateral view of a detail of the apparatus in fig. 3;
- - fig. 6: is a section from VI to VI of fig. 5;
- - fig. 7: is a section from VII to VII of fig. 5;
- - fig. 8: is a detail of fig. 6;
- - fig. 9: is a detail of fig. 7.

### DETAILED DESCRIPTION OF A PREFERENTIAL FORM OF EMBODIMENT

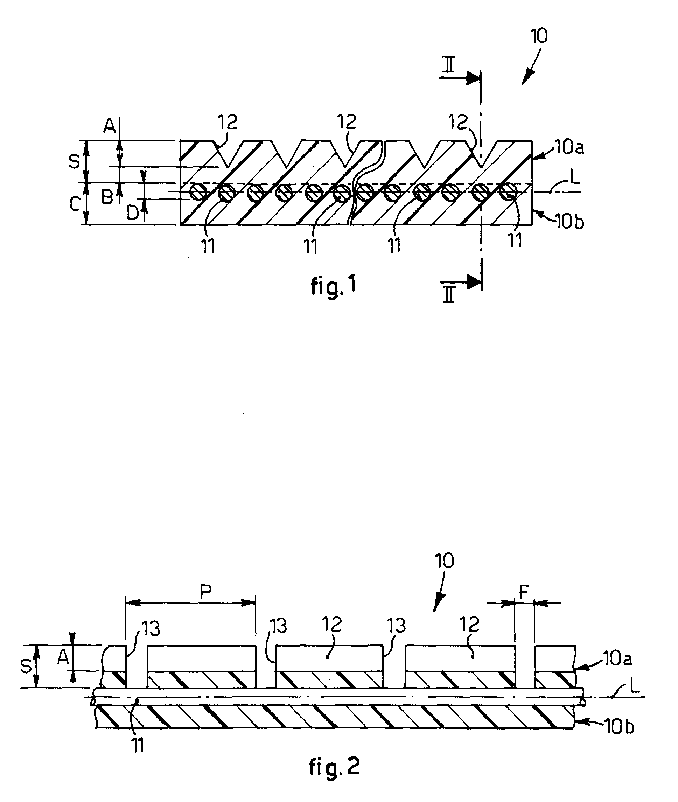

With reference to figs. 1 and 2, a non-extendible element according to the present invention, in this case a belt 10, comprises a base body made of elastomeric material, such as for example polyurethane, inside which a plurality of wires 11 are drowned, made of non-extendible material, for example steel.

The belt 10 is advantageously employed, for example, in the movement of a hoist, a lift or other suspended loads.

The wires 11 are disposed adjacent to each other, they lie on a longitudinal plane "L" of the belt 10 and are interposed between an inner part 10a and an outer part 10b of the belt 10.

On the inner part 10a, that is, the one which during use is able to contact the corresponding movement member, not shown in the drawings, a plurality of hollows 12 and a plurality of grooves 13 are made.

The hollows 12 are disposed longitudinally with respect to the belt 10, they are substantially V-shaped, and have a depth "A" of about 2 mm.

The grooves 13 are disposed transversely with respect to the hollows 12, they have a substantially rectangular shape, but can also be V-shaped or other shapes.

The grooves 13 are at intervals from each other with a pitch "P", which in the case shown here is equal to about 2 cm, it being understood that it can advantageously be comprised between 1 and 5 cm.

The grooves 13 also have a thickness "F" of some millimeters, for example 2 mm, and a depth equal to the thickness S of the inner part 10a, so that they arrive as far as the wires 11. In the case shown here, the thickness "S" is about 3 mm.

Each groove 13 has a substantially rectilinear development and defines an angle "α" comprised between about 45° and 90° with respect to the longitudinal axis of the belt 10.

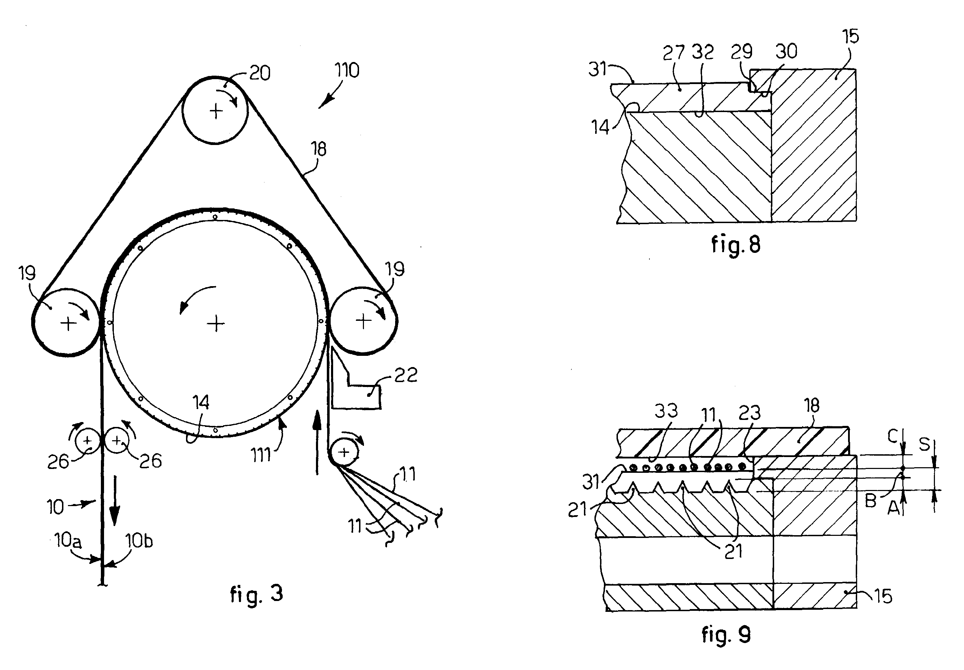

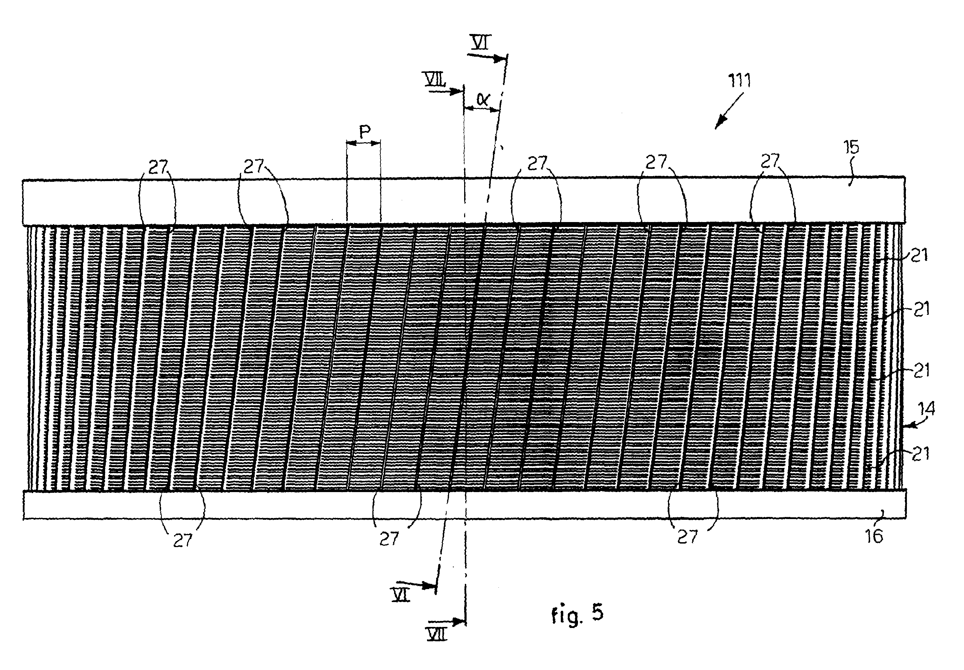

With reference to figs. 3 to 9, in order to achieve the belt 10 an apparatus 110 according to the present invention is used, which comprises a substantially cylindrical rotary drum 111 having a cylindrical surface 14.

On each of the two ends of the cylindrical surface 14 there is a respective first 15 and second flange 16 of annular shape.

The cylindrical surface 14 comprises a plurality of protrusions 21 made in a piece, each shaped like an upside-down V and having a height A of several millimeters, in particular about 2 mm, with respect to the cylindrical surface 14.

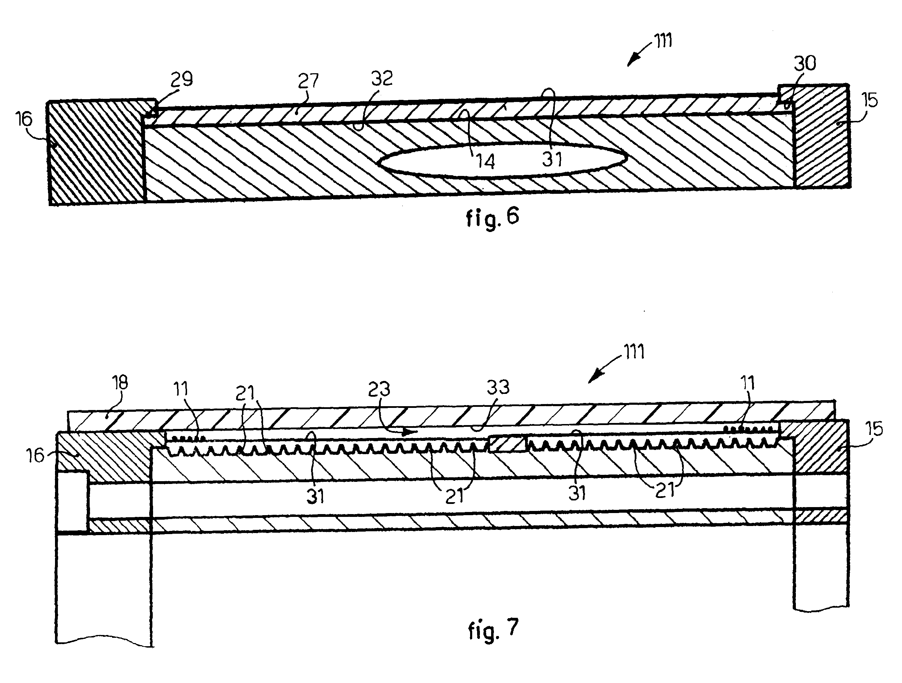

The apparatus 110 also comprises an endless belt 18 which is held thrust, for a part of the cylindrical surface 14 of the rotary drum 111 and by means of two pressure rollers 19 and a tension roller 20, against a supporting surface of the two flanges 15, 16 (figs. 7 and 9).

The endless belt 18 cooperates with the cylindrical surface 14 of the rotary drum 111 and the two flanges 15, 16 in order to define a molding cavity 23, inside which, by means of an extruder 22, the elastomeric material in fluid form is deposited.

Upstream of the rotary drum 111 and inside the molding cavity 23, it is provided to insert the wires 11 that are removed from corresponding coils, not shown, on which they are normally wound.

Downstream of the rotary drum 111 there is a pair of drawing rollers 26 with the function of drawing and guiding the belt 10 from the molding cavity 23.

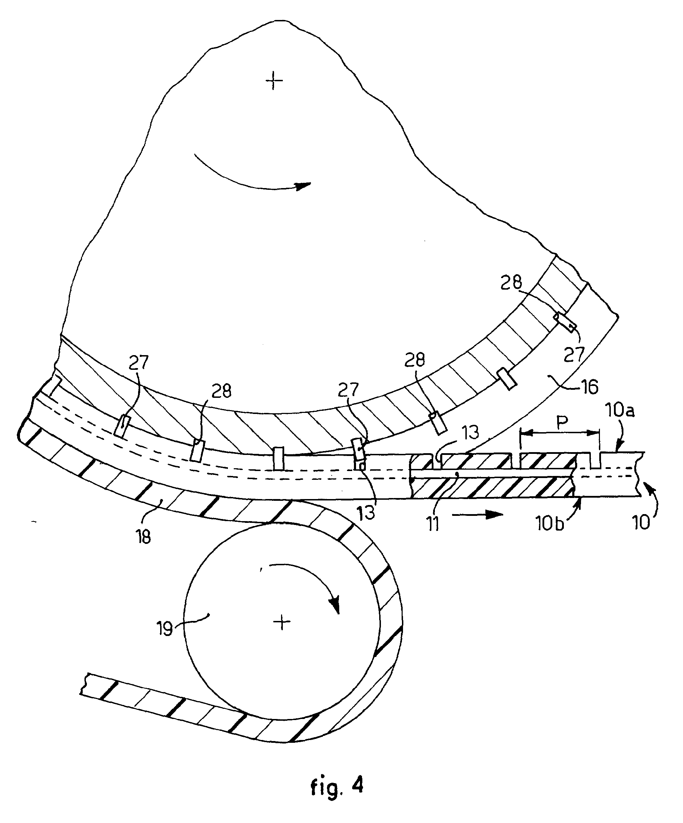

According to the invention, on the cylindrical surface 14 of the rotary drum 111 a plurality of blades 27 are disposed (figs. 4 to 9) which protrude by a distance S equal to about 3 mm from the cylindrical surface 14.

In the case shown here, the blades 27 have an upper edge 31 with a width of about 15 cm, a lower edge 32 with a width of about 16 cm and a thickness F of about 1 mm.

The blades 27 are inserted inside suitable seatings 28, visible in fig. 4, made on the cylindrical surface 14 of the rotary drum 111, for example by milling.

The longitudinal axis of each seating 28 defines a determinate angle a comprised between 0° and about 45° with respect to the axis of rotation of the rotary drum 111. In the case shown here, the angle α is equal to about 10°.

Each blade 27 (figs. 8 and 9) comprises two steps 29 made at the two ends of the upper edge 31, each of which has a width of about 3 mm and is disposed in contact with a respective annular edge 30 made laterally in each flange 15, 16 and facing towards the cylindrical surface 14 of the rotary drum 111.

The annular edge 30 cooperates with the respective step 29 in order to keep each blade 27 inside the corresponding seating 28.

Given that the cylindrical surface 14 of the rotary drum 111 is curved, the distance between each wire 11 and the cylindrical surface 14 varies between two adjacent blades 27.

The blades 27 are therefore disposed on the cylindrical surface 14 with a pitch P that depends on said distance, and which is a function of the radius of the rotary drum 111 and the distance S. This disposition will be a function of the type of cable used and its diameter in order to minimize the polygonal effect. The distance B (fig. 9) between each protrusion 21 and the upper edge 31 of the blades 27 is equal to some millimeters, in the case shown here about 1 mm.

The distance C between the upper edge 31 and the inner surface 33 of the endless belt 18, which faces towards the cylindrical surface 14, is correlated to the diameter D of the wires 11 and to the thickness that the belt must have outside the wires 11. In the case shown here, this thickness is equal to about 2 mm and the diameter D of the wires 11 is equal to about 3 mm. The distance C is therefore equal to about 5 mm.

In order to produce the belt 10 a method is used that provides to insert, inside the molding cavity 23, wires 11 that are held by the drawing rollers 26 in contact with the upper edge 31 of the blades 27.

Simultaneously, the rotary drum 111, the two pressure rollers 19 and the tension roller 20 are made to rotate and hence also the endless belt 18.

The method also provides to deposit elastomeric material in fluid form inside the molding cavity 23.

In correspondence with the zone comprised between two adjacent blades 27, the wires remain tense and distanced from the cylindrical surface 14 and the elastomeric material in fluid form is inserted between the inner surface 33 of the endless belt 18 and the cylindrical surface 14 above, below and around the wires 11.

In this zone, the belt 10 has a maximum thickness equal to S+C (figs. 1 and 2), which in the example shown here is equal to about 8 mm, and a minimum thickness equal to about B in the zones where the hollows 12 are to be found. The latter are made by means of the protrusions 21 of the cylindrical surface 14 and have a shape and size defined by the shape and size of the protrusions 21.

In correspondence with every blade 27 (figs. 4 and 9), the elastomeric material in fluid form is inserted between the upper edge 31 of the blade 27 and the inner surface 33 of the endless belt 18, and the belt 10 in this zone has a thickness equal to C (figs. 1 and 2). The grooves 13 are in this way made by means of the blades 27 and have a shape and size defined by the blades 27.

During the rotation of the rotary drum 111, the elastomeric material is also cooled to a temperature of about 100°, in order to take it to its solid state.

Given that the polymerization process of the elastomeric material is known, it is not relevant to the present invention and therefore the temperatures of deposition and cooling indicated are simply given as non-restrictive examples.

A possible covering step is provided, during which the inner part 10a, particularly the grooves 13, are covered by means of depositing an elastomeric material, for example by means of spraying.

It is clear that modifications and/or additions of parts and/or steps may be made to the belt 10, the apparatus 110 and the method as described heretofore, without departing from the field and scope of the present invention.

It is also clear that, although the present invention has been described with reference to some specific examples, a person of skill in the art shall certainly be able to achieve many other equivalent forms of non-extendible elements, apparatus and method to produce them, having the characteristics as set forth in the claims and hence all coming within the field of protection defined thereby.

## Claims

1. Non-extendible element comprising a base body made of elastomeric material internally reinforced with a plurality of wires (11) of substantially non-extendible material, lying on a longitudinal plane (L) and interposed between an inner part (10a) and an outer part (10b), wherein said inner part (10a) is provided with a plurality of substantially longitudinal hollows (12) and a plurality of grooves (13) disposed transversely to said hollows (12), **characterized in that** the depth of said grooves (13) is greater than or equal to the depth (A) of said hollows (12) and is substantially equal to the thickness (S) of said inner part (10a).

2. Non-extendible element as in claim 1, **characterized in that** each of said grooves (13) has a substantially rectilinear longitudinal development and defines an angle (α) comprised between about 45° and about 90° with respect to the longitudinal axis of the element (10).

3. Non-extendible element as in claim 1 or 2, **characterized in that** said grooves (13) are at intervals from each other with a determinate pitch (P) comprised between about 1 cm and about 5 cm.

4. Non-extendible element as in claim 1, 2 or 3, **characterized in that** each of said grooves (13) has a thickness (F) comprised between about 0.3 and 2 mm.

5. Method to produce an element (10) made of elastomeric material and internally reinforced with a plurality of wires (11) made of substantially non-extendible material, by means of a rotary drum (111) cooperating with an endless belt (18) and shaped so as to define a molding cavity (23), and wherein said wires (11), substantially parallel to each other, are inserted into said molding cavity (23), **characterized in that** while said wires (11) are inserted into said molding cavity (23), said elastomeric material in fluid form is deposited inside said molding cavity (23) so that it drowns said wires (11), simultaneously creating both the outer part (10b) and the inner part (10a) of said element (10).

6. Method as in claim 5, **characterized in that** said wires (11) are kept distanced from the cylindrical surface (14) of said rotary drum (111) by means of spacer means (27) separated from each other at intervals with a determinate pitch (P).

7. Apparatus to produce an element (10) having a body made of elastomeric material internally reinforced with a plurality of wires (11) made of substantially non-extendible material, comprising a rotary drum (111) and an endless belt (18) which cooperates with a cylindrical surface (14) of said rotary drum (111) in order to define a molding cavity (23), inside which, by means of extrusion means (22), said elastomeric material in fluid form is able to be deposited, **characterized in that** said rotary drum (111) comprises a plurality of spacer means (27) disposed on said cylindrical surface (14) and protruding with respect thereto, in order to keep said plurality of wires (11) distanced from said cylindrical surface (14).

8. Apparatus as in claim 7, **characterized in that** said spacer means comprises a plurality of blades (27) disposed transversely with respect to said molding cavity (23).

9. Apparatus as in claim 8, **characterized in that** a drawing means (26) is provided to hold said plurality of wires (11) in contact with the upper edges (31) of the blades (27).

10. Apparatus as in claim 8 or 9, **characterized in that** said blades (27) are disposed in corresponding seatings (28) made on said cylindrical surface (14).

11. Apparatus as in claim 10, **characterized in that** the longitudinal axis of said seatings (28) defines a determinate angle (α) comprised between 0° and about 45° with respect to the axis of rotation of said rotary drum (111).

12. Apparatus as in claim 10 or 11, **characterized in that** said rotary drum (111) comprises two parallel flanges (15, 16), disposed at the ends of said cylindrical surface (14) and cooperating with said blades (27) in order to keep them in the corresponding seatings (28).

13. Apparatus as in any claim from 8 to 12, **characterized in that** said blades (27) are distanced from each other with a pitch (P) which is a function at least of the radius of said rotary drum (111) and the distance (S) of said blades (27) from said cylindrical surface (14).

14. Apparatus as in claim 9, **characterized in that** the distance (C) between the upper edge (31) of each blade (27) and said endless belt (18) is correlated at least to the diameter of said wires (11).
